# EUROPEAN PATENT APPLICATION

(11) **EP 2 113 369 A1**
(43) Date of publication of application: **04.11.2009**
(21) Application number: 08300188.3
(22) Date of filing: 21.04.2008
(51) Int. Cl.: B29C 61/06

(54) **Shape memory composition comprising starch**

(71) Applicant: I.N.R.A. Institut National de la Recherche Agronomique, 75338 Paris (FR)
(72) Inventor: Lourdin, Denis, 44240 Suce sur Erdre (FR); Chaunier, Laurent, 44240 La Chapelle sur Erdre (FR)
(74) Representative: Cabinet Plasseraud

(57) **Abstract**

The present invention relates to a method of forming a composition with a shape in memory from a composition comprising 30% to 100 % of starch and /or starch derivatives, compositions with a shape in memory which can be obtained by this method and use of these compositions.

## Description

### Field of the invention

The invention relates to the field of shape memory polymers, and in particular a process to obtain new compositions comprising 30 to 100% of starch with a shape in memory and use of these compositions.

### Background of the Invention

Shape memory materials are an interesting class of materials which have been investigated in the recent years. Shape memory functionality is the ability of a material to temporarily fix a second shape after an elastic deformation and only recover its original permanent shape if an external stimulus is applied. The advantageous and intriguing properties of these materials are in particular the possibility to initiate a desired change in shape by an appropriate external stimulus, so that an original shape, after deformation, is re-established, and the possibility to deform and program these materials so that highly specific configurations and shape changes can be obtained. The deformed shape is often called the temporary shape (or visible shape). In the art, this effects by a combination of particular polymer segments (called co-polymers) and a specific functionalization process.
The first materials known to have these properties were shape memory metal alloys (SMAs), including TiNi(Nitinol), CuZnAl, and FeNiAl alloys. The structure phase transformation of these materials is known as a martensitic transformation. These materials have been proposed for various uses, including vascular stents, medical guidewires, orthodontic wires, vibration dampers, pipe couplings, electrical connectors, thermostats, actuators, eyeglass frames, and brassiere underwires. These materials have not yet been widely used, in part because they are relatively expensive.
In the recent past shape memory polymers (SMPs) have been developed in order to widen the fields of application for shape memory materials and replace the use of SMAs, in part because the polymers are light, high in shape recovery ability, easy to manipulate, and economical as compared with SMAs. Typical shape memory polymers are for example phase segregated linear block copolymers having a hard segment and a switching segment. The hard segment is typically crystalline, with a defined melting point, while the switching segment is typically amorphous, with a defined glass transition temperature (Tg). In other embodiments, shape memory polymers may, however, possess a different structure. Conventional shape memory polymers generally are segmented polyurethanes, although other polymer structures are possible. However, only a few memory polymer systems have been described: representatives of these types of materials are for example disclosed in the international publications WO 99/42147 and WO 99/42528.
The phenomenon of shape memory property is generally defined as a bulk property of the material after suitable programming steps (deformation and fixation in the deformed state). One important drawback of such conventional shape memory polymers, however, is the fact that such polymers are prepared by laborious chemical synthesis involving relatively expensive starting materials. For example, the shape memory polymers based on ester segments, linked by urethane moieties are disadvantageous in that high priced starting materials have to be reacted with further compounds which require specific measures during the reaction, in particular the isocyanates required for the preparation of the urethane units.

Consequently there is a need for less expensive shape memory polymers, with a more simple synthesis than SMAs and existing shape-memory polymer.

### Summary of the invention

In a first aspect, the present invention relates to a method of forming a composition with a shape in memory comprising the following steps:
a) Preparing a composition comprising 30% to 100 % of starch and /or starch derivatives and having a Tg
b) Bringing or maintaining this composition above its Tg
c) Shaping the composition to form a desired first shape
d) Shaping the composition to form a desired second shape
e) Fixing the second shape of the composition by bringing this composition below its Tg.

In a second aspect, the present invention relates to the use of a composition comprising 30 to 100 % of starch or starch derivatives and having a Tg for preparing a composition with a shape in memory.

In a third aspect, the present invention relates to a composition with a shape in memory which can be obtained by the method according to the present invention.

In a fourth aspect, the present invention relates to a method for restoring a shape memorized in a composition which can be obtained by the method according to the present invention.

In a fifth aspect, the present invention relates to the use of starch or starch derivatives as polymer with a shape in memory.

### Brief description of the drawings

The figure 1 shows the scheme of one process according to claim 2 of the present invention for the formation of a composition comprising starch or starch derivatives with a shape in memory.

The figure 2 (A, B, C) shows the shape of the composition obtained by the method according to Example 1. Figure A and C show the shape F1 in memory in the composition, and Figure B shows the shape F2, visible, of the composition with the shape F1 in memory.
Figure 2A shows the shape F1 after the step c) of the method according to the present invention.
Figure 2B shows the shape F2 after the step d) of the method according to the present invention.
Figure 2C shows the shape F1 after the method for restoring the shape F1 memorized in the composition.

The figure 3 (A, B, C) shows the shape of the composition obtained by the method according to Example 6. Figure A and C show the shape F1 in memory in the composition, and Figure B shows the shape F2, visible, of the composition with the shape F1 in memory.

The figure 4 (A, B, C) shows the shape of the composition obtained by the method according to Example 7. Figure A and C show the shape F1 in memory in the composition, and Figure B shows the shape F2, visible, of the composition with the shape F1 in memory.

The figure 5 (A, B, C) shows the shape of the composition obtained by the method according to Example 8. Figure A and C show the shape F1 in memory in the composition, and Figure B shows the shape F2, visible, of the composition with the shape F1 in memory.

The figure 6 (A, B) shows the shape of the composition obtained by the method according to Example 9. Figure A shows the shape F2, visible, of the composition with the shape F1 in memory. Figure B shows the shape F1 which was in memory in the composition, after recovering.

The figure 7 (A, B) shows the shape of the composition obtained by the method according to Example 10. Figure A shows the shape F2, visible, of the composition with the shape F1 in memory. Figure B shows the shape F1 which was in memory in the composition, after recovering.

### Description of the preferred embodiments

Surprisingly the inventors have discovered that starch, and starch derivatives, can be processed to have a shape in memory by a simple method. Moreover, starch and starch derivative have the advantage to be cheap and easily disposable, biodegradable, nontoxic and edible.

Accordingly, a first object of the present invention is directed to a method of forming a composition with a shape in memory comprising the following steps:
a) Preparing a composition comprising 30% to 100 % of starch and /or starch derivatives and having a Tg
b) Bringing or maintaining this composition above its Tg
c) Shaping the composition to form a desired first shape
d) Shaping the composition to form a desired second shape
e) Fixing the second shape of the composition by bringing this composition below its Tg.

A composition is a "composition with a shape in memory" if the original shape of the composition is recovered by bringing the composition above its Tg even if the original shape of the polymer has previously been strained mechanically at a higher temperature than its Tg and then fixed at a lower temperature than its Tg.
The step of bringing the composition above its Tg can be done by heating and/or hydrating. As an example, said step can correspond to :
- heating the composition at a temperature above the Tg of said composition;
- hydrating the composition to decrease the Tg of said composition to obtain a new glass transition temperature Tg'{Tg'<Tg) under the room temperature; or
- hydrating the composition to decrease the Tg of said composition to obtain a Tg'(Tg'<Tg) and heating said composition at a temperature above its Tg' (heating and hydrating the composition can be done simultaneously).

The expression "composition comprising 30% to 100 % of starch and /or starch derivatives" refers to composition comprising 30 to 100 % of starch or starch derivatives and which may contain, substantially uniformly distributed therein, other components such as plasticiser, colouring or flame-retardant agents, dyes, lubricants or antioxidants, aroma, fillers, in particular inorganic fillers , organic fillers, reinforcing filler, or nanofiller, softening agents, water-repelling agents, surfactants, polymer other than starch, in particular shape memory polymers other than starch, stabilizers, anti-blocking agent or lubricants, antistatic agents, UV-ray absorbers, active ingredients, in particular therapeutic agents, and/or extractable material (a liquid, at least at elevated temperature, which is a latent solvent for the composition).

Preferably, the composition comprises 50 to 100 % of starch or starch derivatives, more preferably 70 to 100% of starch or starch derivatives.

The composition can comprise a starchy product or a combination of starchy products. The expression "starchy product" refers to natural starch (i.e. starch), modified starch (i.e. starch derivatives), and flour.
According to a preferred embodiment of the present invention, said composition comprises natural starch, and "starchy product" refers to natural starch.

The expression "starch" refers to polymeric compounds composed of anhydroglucose. Starch (chemical formula (C₆H₁₀O₅)n,) is a mixture of amylose and amylopectin (usually in 70:30 to 1:99 ratios ). These are both complex carbohydrate polymers of glucose, making starch a glucose polymer as well, as seen by the chemical formula for starch, regardless of the ratio of amylose:amylopectin.
According to the present invention, starch with a ratio of amylose:amylopectin between 1:99 and 99:1, preferably 20:80 and 80:20, more preferably 20:80 and 30:70 is preferred.
Starch or starchy product are obtained from plant material and may be isolated from sources such as cereals, roots, tubers and beans that include, but are not limited to, corn, in particular maize, wheat, potato, tapioca, arracacha, buckwheat, banana, barley, cassava, kudzu, oca, sago, sorghum, sweet potato, taro, yarns, favas, lentils, guar, peas and a combination thereof.

The starch used may be a maize starch, such as the maize starch marketed by ROQUETTE FRERES with a ratio of amylose:amylopectin of 25:75, the maize starch marketed by the same company with a ratio of amylose:amylopectin of 70:30 under the trademark Eurylon 7®, the maize starch marketed by the same company with a ratio of amylose:amylopectin of 1:99 under the trademark Waxilys®, a wheat starch such as the starch marketed by the same company, a potato starch, or a mixture of such starches.

The expression "starch derivatives" refers to chemically modified starch polymer. Accordingly, starch derivatives include, but are not limited to, pre-gelatinised starches; starch esters (such as starch n-octenyl succinate); starch ethers; cross-bonded starches ; retrograded starches ; bleached starches; cationised or anionised starches; amphoteric starches; starch phosphates; hydroxyalkylated starches and a combination thereof.

The International Numbering System for Food Additives (INS) discloses various starch derivatives, which can be used according to the present invention. As an example of such starch derivatives, we can cite:
- 1410: Monostarch phosphate
- 1411: Distarch glycerol
- 1412: Distarch phosphate esterified with sodium trimetaphosphate
- 1413: Phosphated distarch phosphate
- 1414: Acetylated distarch phosphate
- 1420: Starch acetate esterified with acetic anhydride
- 1421: Starch acetate esterified with vinyl acetate
- 1422: Acetylated distarch adipate
- 1423: Acetylated distarch glycerol
- 1440: Hydroxypropyl starch
- 1442: Hydroxypropyl distarch phosphate
- 1443: Hydroxypropyl distarch glycerol
- 1450: Starch sodium octenyl succinate
and combinations thereof.

For simplicity's sake, any references herein to starch will be understood to include both native starch and starch derivatives.

The purpose of step a) of the method of the present invention is to obtain a Tg for a composition comprising 30% to 100 % of starch and /or starch derivatives.
The step a) of preparing a composition comprising 30% to 100 % of starch and /or starch derivatives and having a Tg can be done by mixing the components of the composition, that is to say 30 to 100 % of starch and/ or starch derivatives and 0 to 70% of other components and heating said mix to obtain the melting of starch and/ or starch derivatives.
Without being bound to theories, it is assume that the step of melting starch and/or starch derivatives allows the transformation of starch and/or starch derivatives, which is/are in a crystalline state, in an amorphous state, characterized by a Tg. Starch and/or starch derivatives in a crystalline state do not have a Tg.

The melting temperature and efficiency of transformation of crystalline starch and/or starch derivatives in the amorphous state (having a Tg) can be assessed by checking the loss of starch and/or starch derivatives crystals.
The absence of starch and/or starch derivatives crystals in the composition prepared by step a) of the method of the present invention can be simply determined by method well known from the skilled person, including : Differential Scanning Calorimetry (DSC) according to the method described by BARRON et al ("Microscopical study of the destructuring of waxy maize and smooth pea starches by shear and heat at low hydration", Journal of Cereal Science 2001, vol. 33, pp. 289-300 in particular page 291 from the beginning of the paragraph "DSC and WAXS measurements" to "sealed pans" and page 294 from "for both starches" to "(61-76%)", which is incorporated herewith by reference).
According to a preferred embodiment of the present invention the step a) of preparing a composition comprising 30% to 100 % of starch and /or starch derivatives and having a Tg is done by mixing and heating the ingredients of the composition, more preferably by extrusion.
According to a preferred embodiment of the present invention step a) and step b) are executed simultaneously, for example by extrusion in an extruder. More preferably, step a), step b) and step c) are executed by extrusion in an extruder.
According to a preferred embodiment of the present invention, step a), step b) and step c) are executed by extrusion at a temperature above 90°C and at a specific mechanical energy above 100 J.g⁻¹ for an initial composition with moisture content between 20 and 40% wb (total wet basis).

The expression "Tg" refers to glass transition temperature. Tg is the temperature at which the composition in an amorphous form, becomes brittle on cooling, or soft on heating. More specifically, Tg defines a pseudo second order phase transition in which a supercooled melt yields, on cooling, a glassy structure and properties similar to those of crystalline materials e.g. of an isotropic solid material. Tg is function of the humidity of the composition: Tg can be decreased by increasing the moisture content of the composition (i.e. hydrating the composition) or, on the contrary Tg can be increased by decreasing the moisture content of the composition (i.e. drying the composition).

The Tg of the composition can be simply determined by method well known from the skilled person, including:
- Differential Scanning Calorimetry (DSC) according to the method described by BIZOT H. et al. ("Calorimetric evaluation of the glass transition in hydrated, linear and branched polyanhydroglucose compounds" Carbohydrate polymers 1997, vol. 32, nol, pp. 33-50, in particular from page 35, second paragraph (Water content adjustment) to the end of page 35 (Kalichevsky et al. (1993) which is incorporated herewith by reference) or described by LOURDIN D., BIZOT H. et al. ( "Antiplasticization" in starch-glycerol films? "Journal of Applied Polymer Science, vol. 63 (8) (1997) pap.1047-1053, in particular from page 1048 last paragraph (Measurements of the glass transition), to page 1049 end of the first paragraph (of the order +/- 3°C) which is incorporated herewith by reference);
   or
- Dynamic Mechanical Thermal Analysis (DMTA) according to the method described by LOURDIN D., BIZOT H. et al. ("Antiplasticization" in starch-glycerol films? "Journal of Applied Polymer Science, vol. 63 (8), (1997), pp.1047-1053, in particular at page 1049 second paragraph ("thermomechanical measurements" to "transition region") which is incorporated herewith by reference).

Alternatively, LOURDIN D. et al. ("Influence of equilibrium relative humidity and plasticizer concentration on the water content and glass transition of starch materials" Polymer, 38 (21) (1997) pp. 5401-5406), show that Tg of the composition can be calculated from the Tg of pure components. In particular, page 5404 second paragraph (A smoothing) to page 5405 end of second paragraph (additive concentrations) is incorporated herewith by reference as a method to calculate Tg of a composition from the Tg of pure components comprised in said composition. As an example, the Tg range of a composition containing potato starch / plasticizer (glycerol) / water has been determined and published in the Article LOURDIN D. et al. (1997) previously cited. For example the Tg variation is comprised between 20°C and 100°C when glycerol content varied from 34% to 0% respectively.

According to a preferred embodiment of the present invention the composition has a Tg between -20 and 150°C, more preferably between 20 and 100°C.

The step b) of the method according to the present invention is done by bringing or maintaining the composition above its Tg.

The step a) of the method according to the present invention preferably comprises a step of heating ingredients of the composition comprising 30% to 100 % of starch and /or starch derivatives in order to obtain melting of starch and/ or starch derivatives, and thus obtain a composition with a Tg. The temperature of heating during step a) can be maintained during step b), if this temperature is already above the Tg of the composition.
The step of bringing the composition above its Tg can be done by heating and/or hydrating: As an example, said step can be done by
- heating the composition at a temperature above the Tg of said composition;
- hydrating the composition to decrease the Tg of said composition to obtain a Tg'(Tg'<Tg) below the room temperature; or
- hydrating the composition to decrease the Tg of said composition to obtain a Tg'(Tg'<Tg) and heating said composition at a temperature above its Tg' (heating and hydrating the composition can be done simultaneously).

The expression "hydrating" refers to the addition of water to the composition or to the increase of the humidity of atmosphere surrounding the composition.

The expression "Shaping" refers to the step of giving a shape to the composition.

According to a preferred embodiment of the invention, the step(s) of shaping is/are realized by extrusion, co-extrusion, injection molding, blowing, thermomoulding, lamination, or cutting.

In particular the co-extrusion allows obtaining a co-extruded hollow composition.

The expression "first shape" refers to the invisible shape that is in memory in the composition which can be obtained by the process according to the present invention.

The expression "second shape" refers to the visible shape of the composition which can be obtained by the process according to the present invention.

The step of fixing the second shape of the composition is obtained by bringing this composition below its Tg. This step can be done by cooling and/or drying said composition. As an example, said fixing step can be realized by:
- cooling the composition at a temperature below the Tg of said composition;
- drying the composition to increase the Tg of said composition to obtain a Tg'(Tg'>Tg) above the room temperature; or
- drying the composition to increase the Tg of said composition to obtain a Tg' (Tg'>Tg) above the room temperature and cooling said composition at a temperature below the Tg' of said composition (cooling and drying the composition can be done simultaneously).

The expression "drying" refers to removing of water from the composition, or by decreasing of the hygrometry of air surrounding the composition.

The term "biodegradable" refers to materials that are bioresorbable and/or degrade and/or break down by mechanical degradation upon interaction with a physiological environment into components that are metabolizable or excretable, over a period of time from minutes to three years, preferably less than one year, while maintaining the requisite structural integrity. As used herein in reference to composition, the term "degrade" refers to cleavage of the polymer chain, such that the molecular weight stays approximately constant at the oligomer level and particles of polymer remain following degradation. The term "completely degrade" refers to cleavage of the polymer at the molecular level such that there is essentially complete mass loss. The term "degrade" as used herein includes "completely degrade" unless otherwise indicated.

According to a preferred embodiment of the invention, the method according to the present invention further comprises a step c'), after step c) and before step d), of bringing the composition below its Tg for at least 10 seconds and then bringing the composition above its Tg.

The step c') of bringing the composition below its Tg can be done by cooling and/or drying said composition. As an example, said fixing step can be realized by:
- cooling the composition at a temperature below the Tg of said composition;
- drying the composition to increase the Tg of said composition to obtain a Tg'(Tg'>Tg) above the room temperature; or
- drying the composition to increase the Tg of said composition to obtain a Tg' (Tg'>Tg) above the room temperature and cooling said composition at a temperature below the Tg' of said composition (cooling and drying the composition can be done simultaneously).

According to a preferred embodiment, the composition can further comprises plasticiser, coloring or flame-retardant agents, dyes, lubricants or antioxidants, aroma, fillers, in particular inorganic fillers , organic fillers, reinforcing filler, or nanofiller, softening agents, water-repelling agents such as those of organosilicon nature and, for example, alkali or alkaline-earth metal siliconates, silicone oils, silicone resins, surfactants, polymer other than starch and/or starch derivatives, in particular other shape memory polymers, stabilizers, anti-blocking agent or lubricants such as fatty acid amides, ethylene bisstearoamide, etc., antistatic agents such as sorbitane monostearate, saturated fatty acid esters of fatty alcohols, fatty acid esters of pentaerythritol, etc., UV-ray absorbers such as p-t-butylphenylsalicylate, 2-(2'-hydroxy-5'-methylphenyl)benzotriazole, 2-(2'-hydroxy-3'-t-butyl-5'-methyl-phenyl)-5-chlorobenzotriazole, 2,5-bis-[5'-t-butylbenzoxazolyl-(2)]thiophene, etc., active ingredients, in particular therapeutic agents, extractable material (a liquid, at least at elevated temperature, which is a latent solvent for the composition) and other compounds as described in "Practical Handbook of Additives for Plastics and Rubber" (Kagaku Kogyosha), or combination thereof.

Examples of shape memory polymers other than starch and/or starch derivatives are disclosed in Table 2 and Table 3 page 1548, Table 4 page 1550, and Table 5 page 1551 of Liu et al. ( "Review of progress in shape-memory polymers", Journal of Materials Chemistry, 17 (16), 1543-1558, Royal Society of Chemistry, 2007), incorporated herewith by reference.

According to a preferred embodiment of the invention, the amount of shape memory polymers other than starch and/or starch derivatives in the composition is less than 5% in weight of the composition, preferably less than 4%, more preferably less than 3% and even more preferably less than 2%.

According to another preferred embodiment of the invention, the composition according to the present invention does not comprise any shape memory polymer other than starch and/or starch derivatives.

According to a preferred embodiment of the invention, the amount of filler, in particular inorganic filler, in the composition is less than 20% in weight of the composition preferably less than 10%, more preferably less than 5% and even more preferably less than 2%. Examples of inorganic filler may include titanium, mica, silicon or aluminium oxides, talc, calcium carbonate, bentonite, clay, calcium carbonate.
Use of inorganic filler in excess of 30% by weight of the composition is not desirable, because shape memorizing performance or impact resistance of the obtained composition with a shape in memory will be lowered.
According to another embodiment of the invention, the composition according to the present invention does not comprise any filler.

According to a preferred embodiment of the invention, the amount of plasticizer in the composition is less than 40% in weight of the composition preferably less than 30%, more preferably less than 20% and even more preferably less than 10%.
A plasticiser is a substance which, when added to the composition, produces a product which is flexible, resilient and easier to handle. They are often based on oligosaccharides, disaccharides or monosaccharides, esters of polycarboxylic acids with linear or branched aliphatic alcohols of moderate chain length. Plasticizers work by embedding themselves between the chains of polymers, spacing them apart (increasing of the "free volume"), and thus significantly lowering the glass transition temperature of the composition according to the present invention.
Examples of plasticizer according to the present invention may include sorbitol, glycerol, lactic acid sodium, urea, ethylene glycol, diethylen glycol, polyethylene glycol and combinations thereof.
According to another embodiment of the invention, the composition according to the present invention does not comprise any plasticiser.

Further, the composition with a shape in memory of the present invention can suitably contain additives generally added to polymer resin materials in the similar way to that in the resin materials of the prior art.

According to a preferred embodiment of the invention, the method according to the present invention further comprises a step of expanding the composition.
Said expanding step of the composition can be made simultaneously to step c), or simultaneously with the method for restoring the shape of the composition.

If made simultaneously to step c), expanding the composition can be obtained by increasing temperature during extrusion, relaxing pressure, injection of air, dissolution of supercritical fluid (CO2, nitrogen) during step c).

If made simultaneously with the method for restoring the shape of the composition expanding the composition is realised by increasing temperature, in particular with hot oil bath, frying, microwave, toasting (Infrared radiation).

A second object of the present invention is directed to the use of a composition comprising 30 to 100 % of starch or starch derivatives and having a Tg for preparing a composition with a shape in memory.

Expressions "starch", "starch derivatives", "shape in memory", are the same as previously described.
According to a preferred embodiment, it is preferably used starch as polymer with a shape in memory.

According to a preferred embodiment of the invention, said composition comprised 30 to 100 % of starch or starch derivatives.

Preferably, a composition comprising 30 to 100 % of starch or starch derivatives and having a Tg is prepared, brought or maintain above its Tg, in particular by heating and/or hydrating, shaped to form a desired first shape, optionally this first shape is fixed by bringing the composition below its Tg, in particular by drying and/or cooling and then brought again above the Tg, shaped to form a desired second shape, and finally the second shape of the composition is fixed by bringing the composition to a temperature below its Tg to obtain manufacturing products with a shape in memory.

Preferably said composition comprises 30 to 100% of starch or starch derivatives, more preferably 70 to 100 % of starch or starch derivatives.

Preferably said composition has a Tg between -20 and 150°C, more preferably between 20 and 100°C.
As an example, said composition can have the form of thermal and/or humidity indicators, electronic components, electric components, sutures, orthodontic materials, dentistry materials, bone screws, nails, plates, meshes, prosthetics, pumps, catheters, tubes, films, stents, orthopedic braces, splints, tape for preparing casts, and scaffolds for tissue engineering, contact lenses, drug delivery devices, implants, foams, packaging for foodstuffs, thermoformable packaging, heat-shrinkable packaging, polymer composites, textiles, humidity permeable clothes, diapers, shoe inner lining materials, pipe joints, mask core materials, heat shrinkable tubes, clamping pins, temperature sensors, damping materials, footbed and protective equipment, toys, bonding materials, artificial flowers, cork, food product.

According to another embodiment of the invention, said composition can be coated with a hydrophobic compound. The hydrophobic compound according to the present invention can be watertight rubberized polymer, such as silicon or flexible varnish.
Said coated compositions are interesting in order to be only sensitive to temperature, and not or less sensitive to hygrometry.
Applications of such coated compositions are for example thermal indicators.

A third object of the present invention is directed to a composition with a shape in memory which can be obtained by the method previously described.

As an example, said composition can have the form of thermal and/or humidity indicators, electronic components, electric components, sutures, orthodontic materials, dentistry materials, bone screws, nails, plates, meshes, prosthetics, pumps, catheters, tubes, films, stents, orthopedic braces, splints, tape for preparing casts, and scaffolds for tissue engineering, contact lenses, drug delivery devices, implants, foams, packaging for foodstuffs, thermoformable packaging, heat-shrinkable packaging, polymer composites, textiles, humidity permeable clothes, diapers, shoe inner lining materials, pipe joints, mask core materials, heat shrinkable tubes, clamping pins, temperature sensors, damping materials, footbed and protective equipment, toys, bonding materials, artificial flowers, cork, food product.

According to another preferred embodiment of the invention, said composition with a shape in memory is an expanded composition. Preferably, the expanded composition according to the present invention is an expanded food product. More preferably, the expanded food product is expanded cereal or expanded noodles.
For example expanded cereal with a shape in memory according to the present invention can be breakfast cereals composition which shape in memory will be restored by putting said cereals in water or in milk, or in water, hot or cold, depending of the Tg of the breakfast cereals composition.

Accordingly, the shape in memory noodles or expanded noodles will be restored by putting said noodles in water, hot or cold, depending of the Tg of the noodles composition.

According to another preferred embodiment of the invention, the composition with a shape in memory is a food composition, in particular it can be a candy bar, its shape in memory being restored by putting said food composition in the mouth (for example for such composition Tg of the composition can be above the room temperature but below 37°C, temperature in the mouth).

According to another preferred embodiment of the invention, the composition with a shape in memory is transparent or translucid. For example, such composition may be obtained from composition comprising potato and/or wheat starch, with an extrusion step made at moderated temperature (90 - 120°C).
Particularly, optical properties of such composition with a shape in memory can change when the shape memorized in the composition is restored.

According to another preferred embodiment of the invention, the composition with a shape in memory is a cohesive object, which, when its shape in memory will be restored, lost its cohesive property and become several smaller objects.

According to another preferred embodiment of the invention the composition is coated with a hydrophobic compound.
The hydrophobic compound according to the present invention can be watertight rubberized polymer, such as silicon or flexible varnish.
Said coated compositions are interesting in order to be only sensitive to temperature, and not or less sensitive to hygrometry.
Applications of such coated compositions are for example thermal indicators.

A fourth object of the present invention is directed to a method for restoring a shape memorized in a composition as previously described **characterized in that** the composition is returned in said shape (the first shape in memory) by bringing the composition above its Tg. The step of bringing the composition above its Tg can be done by heating and/or hydrating: As an example, said step can be done by
- heating the composition at a temperature above the Tg of said composition;
- hydrating the composition to decrease the Tg of said composition to obtain a Tg'(Tg'<Tg) below the room temperature; or
- hydrating the composition to decrease the Tg of said composition to obtain a Tg'(Tg'<Tg) and heating said composition at a temperature above its Tg' (heating and hydrating the composition can be done simultaneously).

Particularly, a composition coated with a hydrophobic compound as previously described is returned to said shape (the first shape in memory) by heating the composition at a temperature above its Tg.

A fifth object of the present invention is directed to the use of starch or starch derivatives as polymer with a shape in memory.

Expressions "starch", "starch derivatives", "shape in memory", are the same as previously described.
According to a preferred embodiment, it is preferably used starch as polymer with a shape in memory.

According to a preferred embodiment of the invention, said polymer with a shape in memory comprised 30 to 100 % of starch or starch derivatives. Particularly, said polymer has a Tg.
According to a more preferred embodiment of the invention, said polymer with a shape in memory is used for the preparation of manufacturing products with a shape in memory.

Preferably, a composition comprising 30 to 100 % of starch or starch derivatives and having a Tg is prepared, brought or maintain above its Tg, in particular by heating and/or hydrating, shaped to form a desired first shape, optionally this first shape is fixed by bringing the composition below its Tg, in particular by drying and/or cooling and then brought again above the Tg, shaped to form a desired second shape, and finally the second shape of the composition is fixed by bringing the composition to a temperature below its Tg to obtain manufacturing products with a shape in memory.

Preferably the polymer with a shape in memory comprises 30 to 100% of starch or starch derivatives, more preferably 70 to 100 % of starch or starch derivatives.

Preferably the composition has a Tg between -20 and 150°C, more preferably between 20 to 100°C.
Preferably, the manufacturing products are thermal and/or humidity indicators, electronic components, electric components, sutures, orthodontic materials, dentistry materials, bone screws, nails, plates, meshes, prosthetics, pumps, catheters, tubes, films, stents, orthopedic braces, splints, tape for preparing casts, and scaffolds for tissue engineering, contact lenses, drug delivery devices, implants, foams, packaging for foodstuffs, thermoformable packaging, heat-shrinkable packaging, polymer composites, textiles, humidity permeable clothes, diapers, shoe inner lining materials, pipe joints, mask core materials, heat shrinkable tubes, clamping pins, temperature sensors, damping materials, footbed and protective equipment, toys, bonding materials, artificial flowers, cork, food product.

According to another embodiment of the invention, the composition is coated with a hydrophobic compound. The hydrophobic compound according to the present invention can be watertight rubberized polymer, such as silicon or flexible varnish.
Said coated compositions are interesting in order to be only sensitive to temperature, and not or less sensitive to hygrometry.
Applications of such coated compositions are for example thermal indicators.

In the following, the invention is described in more detail with examples. Yet, no limitation of the invention is intended by the details of the examples. Rather, the invention pertains to any embodiment, which comprises details which are not explicitly mentioned in the examples herein, but which the skilled person finds without undue effort.

### EXAMPLES

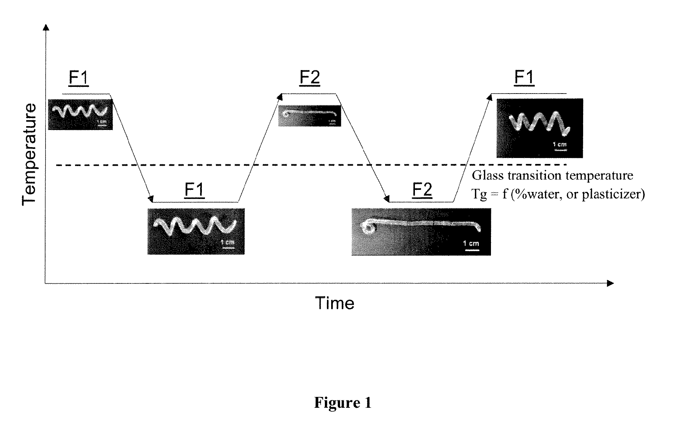

Starchy materials were submitted to a thermo-mechanical treatment, such as the extrusion-cooking in the present work, under usual conditions: 110°C < T < 160°C, for a moisture content, MC = 25 %, wb, the total wet basis.
At the exit of the die of the extruder when the temperature of the material is > Tg, the first shape F1 (see the general scheme on figure1) was given and fixed during the cooling and drying of the sample (T < Tg).
The first shape F1 was "cancelled" at T > Tg, during a heating or a wetting of the sample, combined with its mechanical straining to obtain the second shape F2.
The second shape F2 shape was maintained at T < Tg, during a cooling or a drying of the sample.

The recovery from the second shape F2 to first shape F1 occurs at T > Tg, by a heating (frying in hot oil bath, or micro-waving) or a wetting (high humidity storing, or immersing in water) of the sample.
The operating conditions, such as the duration of the thermal treatment, varied with the shape and the amount of materials.

### * Examples 1 to 5 : starch-based materials

### Example 1:"Cancelling" the initial shape and recovering by frying

### MATERIAL AND METHODS

### Raw materials

Natural starch, in the present trials issued from potato (ROQUETTE FRERES, Lestrem, F62), was used alone, as raw material to prepare samples.

### Obtaining F1: Thermo-mechanical processing of the material (extrusion-cooking)

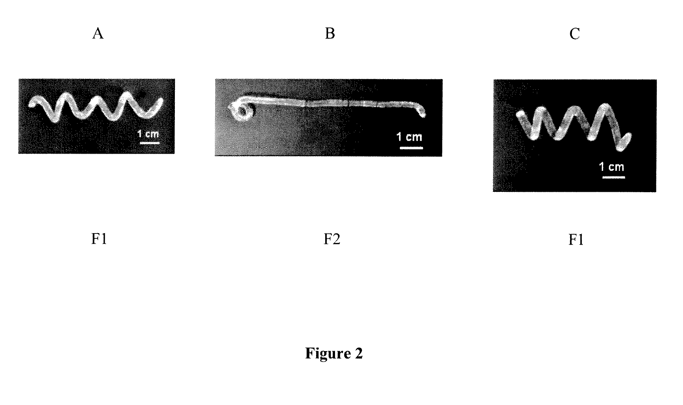

500 g of starch and water (Moisture Content, MC=25%, wb, the total wet basis) were first mixed in a laboratory kneading machine to obtain a polymeric composition, prior to extrusion. Samples were extruded as ravelled cylinders, ∅ from 4 to 5 mm (shape F1), using a SCAMIA single-screw machine (Scamex, Crosne, F91) (see figure 2A). The temperature was 100°C and 110°C in the two first parts of the barrel of the extruder. The barrel of the extruder was 200 mm long (features of the screw: Length/Diameter = 10). Temperature at the cylindrical die (the third part of the extruder) was set at 110°C for the present trials. The screw speed was set at 25 rpm. Specific mechanical energy, measured from the torque of the shaft, was 201 J.g⁻¹.

### Maintaining F1: Cooling and drying during the storage of the sample

Samples were cooled to room temperature at the exit of the die of the extruder. After cooling, ravelled cylinders were stored in desiccators at stable low relative humidity (Relative Humidity, RH = 59% at 20°C) for one month, in order to reduce the residual water equilibrium (drying). After equilibrium humidity the moisture content of the samples measured by thermogravimetry was 13 %, wb. Tg of the sample measured by DSC was about 75°C. The samples showed then a rigid mechanical behaviour.

### Obtaining F2: Heating the sample

The sample was immersed in an oil bath at 95°C, during 2 minutes, for 6 g starch. Then the sample was removed from the bath and presented a ductile mechanical behaviour. It was unrolled, in order to obtain a linear cylinder (shape F2).

### Maintaining the shape F2: Cooling and drying during the storage of the sample

To maintain the shape F2, the sample had now to get rigid mechanical properties, at temperature below its Tg. It was cooled at room temperature and maintained at low humidity level, for T < Tg (RH = 59% at 20°C, during 1 week) (see figure 2B).

### Recovering the shape F1: Heating the sample

The sample was immersed in an oil bath at 95°C, during 2 minutes, for 6 g starch. Then the material presented a ductile behaviour and recovered the shape F1 (see Figure 2C).

### Example 2: "Cancelling" the initial shape by frying and recovering by micro-waves heating

### MATERIAL AND METHODS

### Raw materials

Natural starch, in the present trials issued from potato (Roquette Frères, Lestrem, F62), was used alone, as raw material to prepare samples.

### Obtaining F1: Thermo-mechanical processing of the material (extrusion-cooking)

500 g of starch and water (Moisture Content, MC=25%, wb, the total wet basis) were first mixed in a laboratory kneading machine to obtain a polymeric composition, prior to extrusion. Samples were extruded as ravelled cylinders, ∅ from 4 to 5 mm (shape F1), using a SCAMIA single-screw machine (Scamex, Crosne, F91). The temperature was 100°C and 110°C in the two first parts of the barrel of the extruder. The barrel of the extruder was 200 mm long (features of the screw: Length/Diameter = 10). Temperature at the die was set at 120°C for the present trials. The screw speed was set at 25 rpm. Specific mechanical energy, measured from the torque of the shaft, was 300 J.g⁻¹.

### Maintaining F1: Cooling and drying during the storage of the sample

Samples were cooled to room temperature at the exit of the die of the extruder. After cooling, cylinders were stored in dessicators at stable low relative humidity (Relative Humidity, RH = 59% at 20°C) for one month, in order to reduce the residual water equilibrium (drying). The samples showed then a rigid mechanical behaviour.

### Obtaining F2: Heating the sample

The sample was immersed in an oil bath at 95°C, during 2 minutes, for 6 g starch. Then the sample was removed from the bath and presented a ductile mechanical behaviour. It was unrolled, in order to obtain a linear cylinder (shape F2).

### Maintaining the shape F2: Cooling and drying during the storage of the sample

To maintain the shape F2, the sample had now to get rigid mechanical properties, at temperature below its Tg. It was cooled at room temperature and maintained at low humidity level, for T < Tg (RH = 59% at 20°C, during 1 week).

### Recovering the shape F1: Heating the sample

The sample was heated at T>Tg by a micro-waves heating: 750W, during 10 seconds, for 6g starch. Then the material presented a ductile behaviour and recovered the shape F1.

### Example 3: "Cancelling" the initial shape and recovering the shape by micro-waves heating

### MATERIAL AND METHODS

### Raw materials

Natural starch, in the present trials issued from potato (ROQUETTE FRERES, Lestrem, F62), was used alone, as raw material to prepare samples.

### Obtaining F1: Thermo-mechanical processing of the material (extrusion-cooking)

500 g of starch and water (Moisture Content, MC=25%, wb, the total wet basis) were first mixed in a laboratory kneading machine to obtain a polymeric composition, prior to extrusion. Samples were extruded as ravelled cylinders, ∅ from 4 to 5 mm (shape F1), using a SCAMIA single-screw machine (Scamex, Crosne, F91). The temperature was 100°C and 110°C in the two first parts of the barrel of the extruder. The barrel of the extruder was 200 mm long (features of the screw: Length/Diameter = 10). Temperature at the die was set at 120°C for the present trials. The screw speed was set at 25 rpm. Specific mechanical energy, measured from the torque of the shaft, was 300 J.g⁻¹.

### Maintaining F1: Cooling and drying during the storage of the sample

Samples were cooled to room temperature at the exit of the die of the extruder. After cooling, cylinders were stored in dessicators at stable low relative humidity (Relative Humidity, RH = 59% at 20°C) for one month, in order to reduce the residual water equilibrium (drying). The samples showed then a rigid mechanical behaviour.

### Obtaining F2: Heating the sample

The sample was heated at T>Tg by a micro-waves heating: 750W, during 10 seconds, for 6g starch. Then the sample was removed from the bath and presented a ductile mechanical behaviour. It was unrolled, in order to obtain a linear cylinder (shape F2).

### Maintaining the shape F2: Cooling and drying during the storage of the sample

To maintain the shape F2, the sample had now to get rigid mechanical properties, at temperature below its Tg. It was cooled at room temperature and maintained at low humidity level, for T < Tg (RH = 59% at 20°C, during 1 week).

### Recovering the shape F1: Heating the sample

The sample was heated at T>Tg by a micro-waves heating: 750W, during 10 seconds, for 6g starch. Then the material presented a ductile behaviour and recovered the shape F1.

### Example 4: "Cancelling" the initial shape and recovering the shape by wetting

### MATERIAL AND METHODS

### Raw materials

Natural starch, in the present trials issued from potato (ROQUETTE FRERES, Lestrem, F62), was used alone, as raw material to prepare samples.

### Obtaining F1: Thermo-mechanical processing of the material (extrusion-cooking)

500 g of starch and water (Moisture Content, MC=25%, wb, the total wet basis) were first mixed in a laboratory kneading machine to obtain a polymeric composition, prior to extrusion. Samples were extruded as ravelled cylinders, ∅ from 4 to 5 mm (shape F1), using a SCAMIA single-screw machine (Scamex, Crosne, F91). The temperature was 100°C and 110°C in the two first parts of the barrel of the extruder. The barrel of the extruder was 200 mm long (features of the screw: Length/Diameter = 10). Temperature at the die was set at 120°C for the present trials. The screw speed was set at 25 rpm. Specific mechanical energy, measured from the torque of the shaft, was 300 J.g⁻¹.

### Maintaining F1: Cooling and drying during the storage of the sample

Samples were cooled to room temperature at the exit of the die of the extruder. After cooling, cylinders were stored in dessicators at stable low relative humidity (Relative Humidity, RH = 59% at 20°C) for one month, in order to reduce the residual water equilibrium (drying). The samples showed then a rigid mechanical behaviour.

### Obtaining F2: Wetting the sample

The sample was conditioning at relative humidity of 97% at 20°C. After equilibrium humidity the moisture content of the samples measured by thermogravimetry was 23 %, wb. Then the sample presented a ductile mechanical behaviour. It was unrolled, in order to obtain a linear cylinder. Its shape was maintained on a tensile device.

### Maintaining the shape F2: Drying during the storage of the sample

To maintain the shape F2, the sample had now to get rigid mechanical properties. It was dried at low humidity level, RH = 59% at 20°C, during 1 week.

### Recovering the shape F1: Wetting the sample

The sample was conditioning at relative humidity of 97% at 20°C. Then the material presented a ductile behaviour and recovered the shape F1, after 5 days.

### Example 5: "Cancelling" the initial shape by frying and recovering by wetting

### MATERIAL AND METHODS

### Raw materials

Natural starch, in the present trials issued from potato (ROQUETTE FRERES, Lestrem, F62), was used alone, as raw material to prepare samples.

### Obtaining F1: Thermo-mechanical processing of the material (extrusion-cooking)

500 g of starch and water (Moisture Content, MC=25%, wb, the total wet basis) were first mixed in a laboratory kneading machine to obtain a polymeric composition, prior to extrusion. Samples were extruded as ravelled cylinders, ∅ from 4 to 5 mm (shape F1), using a SCAMIA single-screw machine (Scamex, Crosne, F91). The temperature was 100°C and 110°C in the two first parts of the barrel of the extruder. The barrel of the extruder was 200 mm long (features of the screw: Length/Diameter = 10). Temperature at the die was set at 110°C for the present trials. The screw speed was set at 25 rpm. Specific mechanical energy, measured from the torque of the shaft, was 201 J.g⁻¹.

### Maintaining F1: Cooling and drying during the storage of the sample

Samples were cooled to room temperature at the exit of the die of the extruder. After cooling, cylinders were stored in dessicators at stable low relative humidity (Relative Humidity, RH = 59% at 20°C) for one month, in order to reduce the residual water equilibrium (drying). After equilibrium humidity the moisture content of the samples measured by thermogravimetry was 13 %, wb. Tg of the sample measured by DSC was about 75°C. The samples showed then a rigid mechanical behaviour.

### Obtaining F2: Heating the sample

The sample was immersed in an oil bath at 95°C, during 2 minutes, for 6 g starch. Then the sample was removed from the bath and presented a ductile mechanical behaviour. It was unrolled, in order to obtain a linear cylinder (shape F2).

### Maintaining the shape F2: Cooling and drying during the storage of the sample

To maintain the shape F2, the sample had now to get rigid mechanical properties, at temperature below its Tg. It was cooled at room temperature and maintained at low humidity level, for T < Tg (RH = 59% at 20°C, during 1 week).

### Recovering the shape F1: Wetting the sample

The sample was conditioning at relative humidity of 97% at 20°C. Then the material presented a ductile behaviour and recovered after 5 days the shape F1.

The examples 1 to 5 have been carried out with wheat starch (ROQUETTE FRERES, Lestrem, F62) extruded at the same temperatures, for a specific mechanical energy at 530 J/g. The same shape recovering phenomenon was obtained.

Possible industrial applications of starch-based compositions according to example 1-5 are for example temperature or humidity sensitive materials (sensors).

### * Examples 6 to 8: flour-based materials

### Example 6: "Cancelling" the initial shape by frying and recovering by wetting

### MATERIAL AND METHODS

### Raw materials

Maize flour (ROQUETTE FRERES, Lestrem, F62) was used alone, as raw material to prepare samples.

### Obtaining F1: Thermo-mechanical processing of the material (extrusion-cooking)

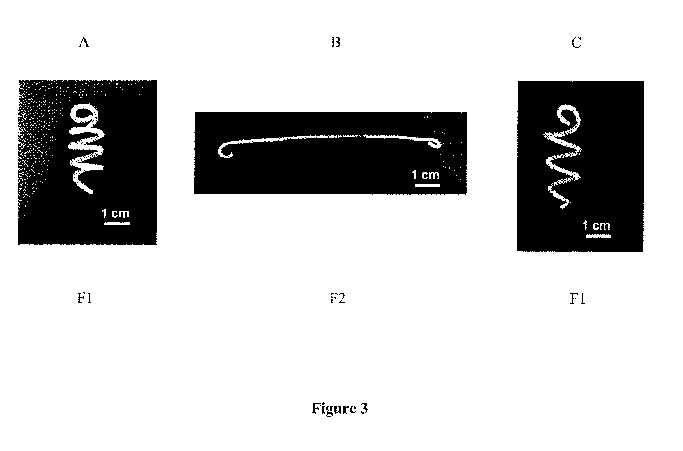

500 g of maize flour and water (Moisture Content, MC=25%, wb, the total wet basis) were first mixed in a laboratory kneading machine to obtain a polymeric composition, prior to extrusion. Samples were extruded as ravelled cylinders, ∅ from 3 to 4 mm (shape F1, see figure 3A), using a SCAMIA single-screw machine (Scamex, Crosne, F91). The temperature was 104°C and 110°C in the two first parts of the barrel of the extruder. The barrel of the extruder was 200 mm long (features of the screw: Length/Diameter = 10). Temperature at the die was set at 120°C for the present trials. The screw speed was set at 20 rpm. Specific mechanical energy, measured from the torque of the shaft, was 147 J.g⁻¹.

### Maintaining F1: Cooling and drying during the storage of the sample

Samples were cooled to room temperature at the exit of the die of the extruder. After cooling, ravelled cylinders were stored in dessicators at stable low relative humidity (Relative Humidity, RH = 59% at 20°C) for one month, in order to reduce the residual water equilibrium (drying). After equilibrium humidity the moisture content of the samples measured by thermogravimetry was 12 %, wb. Tg of the sample measured by DSC was about 70°C. The samples showed then a rigid mechanical behaviour.

### Obtaining F2: Heating the sample

The sample was immersed in an oil bath at 95°C, during 2 minutes, for 5 g extruded sample. Then the sample was removed from the bath and presented a ductile mechanical behaviour. It was unrolled, in order to obtain a linear cylinder (shape F2, see figure 3B).

### Maintaining the shape F2: Cooling and drying during the storage of the sample

To maintain the shape F2, the sample had now to get rigid mechanical properties, at temperature below its Tg. It was cooled at room temperature and maintained at low humidity level, for T < Tg (RH = 59% at 20°C, during 1 week).

### Recovering the shape F1: Wetting the sample

The sample was conditioning at relative humidity of 97% at 20°C. Then the material presented a ductile behaviour and recovered after 5 days the shape F1 (see figure 3C).

### Example 7: "Cancelling" the initial shape by frying and recovering by immersion

### MATERIAL AND METHODS

### Raw materials

Maize flour (ROQUETTE FRERES, Lestrem, F62) was used alone, as raw material to prepare samples.

### Obtaining F1: Thermo-mechanical processing of the material (extrusion-cooking)

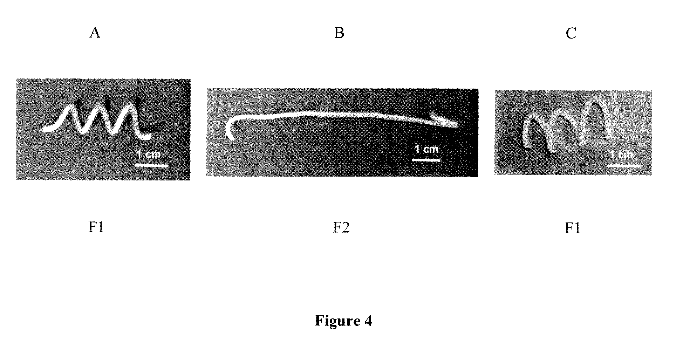

500 g of maize flour and water (Moisture Content, MC=25%, wb, the total wet basis) were first mixed in a laboratory kneading machine to obtain a polymeric composition, prior to extrusion. Samples were extruded as ravelled cylinders, ∅ from 3 to 4 mm (shape F1, see figure 4A), using a SCAMIA single-screw machine (Scamex, Crosne, F91). The temperature was 100°C and 110°C in the two first parts of the barrel of the extruder. The barrel of the extruder was 200 mm long (features of the screw: Length/Diameter = 10). Temperature at the die was set at 120°C for the present trials. The screw speed was set at 20 rpm. Specific mechanical energy, measured from the torque of the shaft, was 147 J.g⁻¹.

### Maintaining F1: Cooling and drying during the storage of the sample

Samples were cooled to room temperature at the exit of the die of the extruder. After cooling, ravelled cylinders were stored in dessicators at stable low relative humidity (Relative Humidity, RH = 59% at 20°C) for one month, in order to reduce the residual water equilibrium (drying). After equilibrium humidity the moisture content of the samples measured by thermogravimetry was 12 %, wb. Tg of the sample measured by DSC was about 70°C. The samples showed then a rigid mechanical behaviour.

### Obtaining F2: Heating the sample

The sample was immersed in an oil bath at 95°C, during 2 minutes, for 5 g extruded sample. Then the sample was removed from the bath and presented a ductile mechanical behaviour. It was unrolled, in order to obtain a linear cylinder (shape F2, see figure 4B).

### Maintaining the shape F2: Cooling and drying during the storage of the sample

To maintain the shape F2, the sample had now to get rigid mechanical properties, at temperature below its Tg. It was cooled at room temperature and maintained at low humidity level, for T < Tg (RH = 59% at 20°C, during 1 week).

### Recovering the shape F1: Immersing the sample

The sample was immersed in water at 19°C. Then the sample recovered the shape F1 after 120 minutes (see figure 4C). A similar processed sample was also immersed in hot water, at 90°C. Then the sample recovered the shape F1 after 1 minute.

### Example 8: Expanded product and "Cancelling" the initial shape by frying and recovering by frying

### MATERIAL AND METHODS

### Raw materials

Maize flour (ROQUETTE FRERES, Lestrem, F62) was used alone, as raw material to prepare samples.

### Obtaining F1: Thermo-mechanical processing of the expanded material (extrusion-cooking)

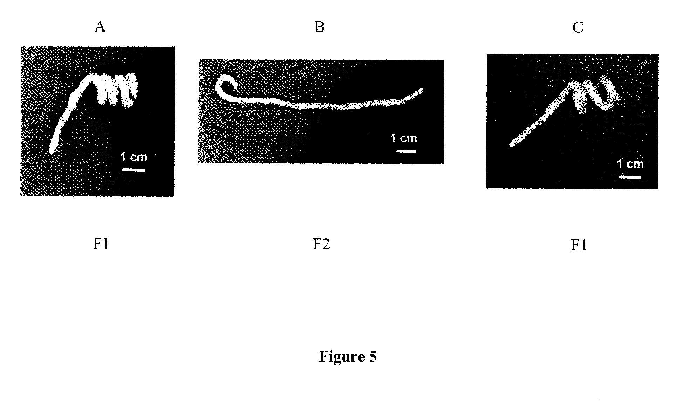

500 g of maize flour and water (Moisture Content, MC=25%, wb, the total wet basis) were first mixed in a laboratory kneading machine to obtain a polymeric composition, prior to extrusion. Samples were extruded as ravelled cylinders, ∅ from 5 to 6 mm (shape F1, see figure 5A), using a SCAMIA single-screw machine (Scamex, Crosne, F91). The temperature was 100°C and 110°C in the two first parts of the barrel of the extruder. The barrel of the extruder was 200 mm long (features of the screw: Length/Diameter = 10). Temperature at the die was set at 140°C to expand the extrudates for the present trials. The screw speed was set at 20 rpm. Specific mechanical energy, measured from the torque of the shaft, was 136 J.g⁻¹.

### Maintaining F1: Cooling and drying during the storage of the sample

Samples were cooled to room temperature at the exit of the die of the extruder. After cooling, ravelled cylinders were stored in dessicators at stable low relative humidity (Relative Humidity, RH = 59% at 20°C) for one month, in order to reduce the residual water equilibrium (drying). After equilibrium humidity the moisture content of the samples measured by thermogravimetry was 12 %, wb. The samples showed then a rigid mechanical behaviour.

### Obtaining F2: Heating the sample

The sample was immersed in an oil bath at 95°C, during 2 minutes, for 5 g extruded sample. Then the sample was removed from the bath and presented a ductile mechanical behaviour. It was unrolled, in order to obtain a linear cylinder (shape F2, see figure 5B).

### Maintaining the shape F2: Cooling and drying during the storage of the sample

To maintain the shape F2, the sample had now to get rigid mechanical properties, at temperature below its Tg. It was cooled at room temperature and maintained at low humidity level, for T < Tg (RH = 59% at 20°C, during 1 week).

### Recovering the shape F1: Heating the sample

The sample was immersed in an oil bath at 95°C, during 2 minutes, for 5 g expanded sample. Then the expanded material presented a ductile behaviour and recovered the shape F1 (see figure 5C).

Possible industrial applications of starch-based compositions according to example 6-8 are for example food products with a shape in memory, especially in the case of cereals: breakfast cereals, noodles, funny snacks.

### * Examples 9 to 10: Alternative processing for starch-based materials

### Example 9: "Cancelling" the initial shape by thermo-moulding and recovering by wetting

### MATERIAL AND METHODS

### Raw materials

Wheat starch (ROQUETTE FRERES, Lestrem, F62) was used alone, as raw material to prepare samples.

### Obtaining F1: Thermo-mechanical processing of the material (extrusion-cooking)

500 g of starch and water (Moisture Content, MC=25%, wb, the total wet basis) were first mixed in a laboratory kneading machine to obtain a polymeric composition, prior to extrusion. Samples were extruded as ravelled cylinders, ∅ from 3 to 4 mm (the shape F1), using a SCAMIA single-screw machine (Scamex, Crosne, F91). The temperature was 100°C and 110°C in the two first parts of the barrel of the extruder. The barrel of the extruder was 200 mm long (features of the screw: Length/Diameter = 10). Temperature at the die was set at 120°C for the present trials. The screw speed was set at 25 rpm. Specific mechanical energy, measured from the torque of the shaft, was 307 J.g⁻¹.

### Maintaining F1: Cooling and drying during the storage of the sample

Samples were cooled to room temperature at the exit of the die of the extruder. After cooling, ravelled cylinders were stored in dessicators at stable low relative humidity (Relative Humidity, RH = 59% at 20°C) for one month, in order to reduce the residual water equilibrium (drying). After equilibrium humidity the moisture content of the samples measured by thermogravimetry was 12 %, wb. The samples showed then a rigid mechanical behaviour.

### Obtaining and maintaining F2: Thermo-moulding

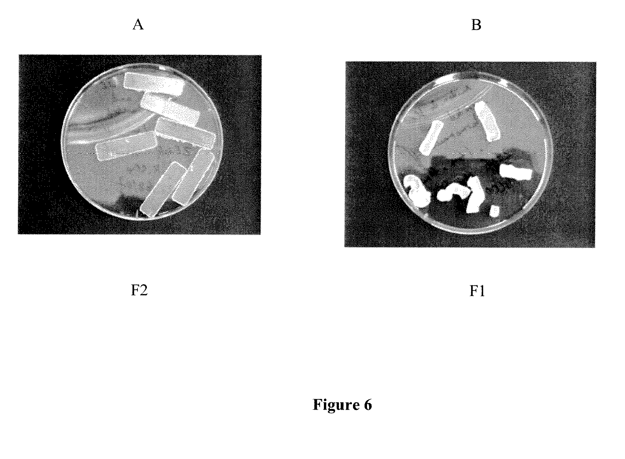

One big piece, or two or three little pieces of extruded cylinders (F1) were weighted to obtain exactly 0.5g sample. Then they were put in a barrel-like mould and then submitted to the thermo-moulding: 300 bar, 120°C, during 2 minutes. After cooling under pressure the rigid flat barrel (35 x 10 x 1 mm³), the sample was removed from the mould (shape F2, see figure 6A).

### Recovering the shape F1: Wetting the sample

The sample was conditioning at relative humidity of 97% at 20°C. Then the material presented a ductile behaviour and recovered the cylindrical shape : F1, after 3 days. The number of initial pieces of cylinder was recovered for each flat thermo-moulded barrel (see figure 6B).

### Example 10: Continuous process for "cancelling" the initial shape and frying for recovering

### MATERIAL AND METHODS

### Raw materials

Natural starch, in the present trials issued from potato (ROQUETTE FRERES, Lestrem, F62), was used alone, as raw material to prepare samples.

### Obtaining F1: Thermo-mechanical processing of the material (extrusion-cooking) followed by lamination

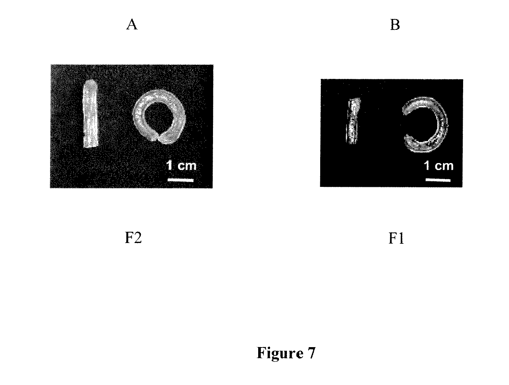

500 g of starch and water (Moisture Content, MC=25%, wb, the total wet basis) were first mixed in a laboratory kneading machine to obtain a polymeric composition, prior to extrusion. Samples were extruded as straight cylinders, ∅ from 4 to 5 mm (shape F1), using a SCAMIA single-screw machine (Scamex, Crosne, F91). The temperature was 100°C and 110°C in the two first parts of the barrel of the extruder. The barrel of the extruder was 200 mm long (features of the screw: Length/Diameter = 10). Temperature at the die was set at 120°C for the present trials. The screw speed was set at 20 rpm. Specific mechanical energy, measured from the torque of the shaft, was 251 J.g⁻¹. The lamination was carried out on the hot sample, at 5 cm from the die, with a roller-flattener (gap = 0.8mm). The flat sample obtained corresponds to the shape F2 (see figure 7A: a straight flattened extrudate on the left of the picture and a curved flattened extrudate on the right of the picture).

### Maintaining F2: Cooling and drying during the storage of the sample

Samples were cooled to room temperature. After cooling, samples were stored in desiccators at stable low relative humidity (Relative Humidity, RH = 59% at 20°C) for one month, in order to reduce the residual water equilibrium (drying). The samples showed then a rigid mechanical behaviour.

### Recovering the shape F1: Heating the sample

The sample was immersed in an oil bath at 95°C, during 2 minutes. Then the material presented a ductile behaviour and recovered the cylindrical shape F1, as given when flowing through the die during the extrusion (see Figure 7B: a straight cylindrical sample on the left of the picture and a curved cylindrical sample on the right of the picture).

The examples 9 and 10 illustrate applications of different starches and their continuous processing for obtaining biodegradable shape-memory polymers in the case of sensitive materials to humidity and temperature.

## Claims

1. A method of forming a composition with a shape in memory comprising the following steps :
a) Preparing a composition comprising 30 to 100 % of starch or starch derivatives and having a Tg,
b) Bringing or maintaining the composition above its Tg,
c) Shaping the composition to form a desired first shape,
d) Shaping the composition to form a desired second shape,
e) Fixing the second shape of the composition by bringing the composition below its Tg.

2. The method of claim 1, further comprising a step c'), after step c) and before step d), of bringing the composition below its Tg and then bringing the composition above its Tg.

3. The method of claim 1 or 2, **characterized in that** the composition is shaped by extrusion, co-extrusion, injection molding, blowing, thermomoulding, lamination or cutting.

4. The method according to any of claims 1 to 3, **characterized in that** the composition further comprises plasticiser, coloring or flame-retardant agents, dyes, lubricants or antioxidants, aroma, fillers, softening agents, water-repelling agents, surfactants, polymer other than starch, in particular shape memory polymers, stabilizers, anti-blocking agent or lubricants, antistatic agents, UV-ray absorbers, active ingredients, extractable material or combinations thereof.

5. The method according to claim 4 **characterized in that** the plasticiser is sorbitol or glycerol.

6. The method according to any of claims 1 to 5, **characterized in that** it further comprises a step of expanding the composition simultaneously to step c.

7. Use of a composition comprising 30 to 100 % of starch or starch derivatives and having a Tg for preparing a composition with a shape in memory.

8. Composition with a shape in memory, which can be obtained by the method according to any of claims 1 to 6.

9. Composition according to claim 8, **characterized in that** the composition is coated with a hydrophobic compound.

10. Composition according to any of claims 8 or 9, which can have the form selected in thermal and/or humidity indicators, electronic components, electric components, sutures, orthodontic materials, dentistry materials, bone screws, nails, plates, meshes, prosthetics, pumps, catheters, tubes, films, stents, orthopedic braces, splints, tape for preparing casts, and scaffolds for tissue engineering, contact lenses, drug delivery devices, implants, foams, packaging for foodstuffs, thermoformable packaging, heat-shrinkable packaging, polymer composites, textiles, humidity permeable clothes, diapers, shoe inner lining materials, pipe joints, mask core materials, heat shrinkable tubes, clamping pins, temperature sensors, damping materials, footbed and protective equipment, toys, bonding materials, artificial flowers, cork, food product.

11. Composition according to any of claims 8 to 10, **characterized in that** it is an expanded composition.

12. Composition according to claim 11, **characterized in that** the expanded composition is an expanded food product.

13. A method for restoring a shape memorized in a composition as defined in any of claims 8 to 12, **characterized in that** the composition is returned to said shape by bringing the composition above its Tg.

14. The method according to claim 13 for restoring a shape memorized in a composition as defined in claim 9, **characterized in that** the composition is returned in said shape by heating the composition above its Tg.

15. The method according to any of claims 13 or 14, **characterized in that** it comprises a step of expanding the composition simultaneously to the recovering of said shape.

16. Use of starch or starch derivatives as polymer with a shape in memory.

17. Use according to claim 16, **characterized in that** said polymer with a shape in memory comprised 30 to 100% of starch or starch derivatives.
